# FASCICULE DE BREVET EUROPEEN

(11) **EP 3 077 479 B1**
(45) Date de publication et mention de la délivrance du brevet: **07.10.2020**
(21) Numéro de dépôt: 14805879.5
(22) Date de dépôt: 28.11.2014
(51) Int. Cl.: C10B 47/18, C10B 53/02, B01F 7/16

(54) **DISPOSITIF DE PRODUCTION DE CHARBON VERT À USAGE AGRICOLE**
VORRICHTUNG ZUR HERSTELLUNG VON GRÜNER KOHLE ZUR LANDWIRTSCHAFTLICHEN VERWENDUNG
DEVICE FOR PRODUCING GREEN COAL FOR AGRICULTURAL USE

(30) Priorité: 04.12.2013 FR 1362090
(43) Date de publication de la demande: 12.10.2016
(73) Titulaire: Mansour, Rawya Lofty, 98000 Monaco (MC)
(72) Inventeur: Mansour, Rawya Lofty, 98000 Monaco (MC)
(74) Mandataire: Hautier IP
(86) Numéro de dépôt international: PCT/EP2014/075982
(87) Numéro de publication internationale: WO 2015/082355

(56) Documents cités:
- WO-A1-2012/059113
- BE-A1- 884 953
- JP-A- 2005 111 437
- JP-A- 2005 146 119
- JP-A- 2005 238 120

## Description

La présente invention concerne un dispositif de production de charbon à usage agricole. Le charbon à usage agricole est généralement dénommé en anglais « biochar » qui est la contraction des termes bio et charcoal, le biochar étant utilisé pour améliorer ou restaurer les sols notamment des terres cultivées, en milieu tropical ou non.

La présente invention permet la fabrication de ce charbon à usage agricole à partir de matériaux organiques agricoles par exemple de la paille de riz bien que ce cas ne soit pas limitatif. On peut en particulier employer d'autres déchets d'origine agricole ou toute autre forme de biomasse. On parle d'une manière générale de charbon vert.

Dans ce domaine, le demandeur a déjà proposé, par la publication WO-A-2012059113, un appareil de fabrication de charbon à usage agricole. Suivant cette publication, un réceptacle est formé pour recevoir la matière organique, par exemple de la paille de riz, et pour réaliser une transformation dans laquelle la matière organique est soumise à un apport de chaleur de sorte à réaliser une réaction sans oxygène, assimilable à une pyrolyse, permettant la réduction des matières organiques en produits carbonés sous forme de biochar. Le réceptacle recevant la matière organique est entouré par un volume périphérique d'une enceinte soumis à une forte température, par exemple par un brûleur à fuel. Durant cette opération, un brassage peut être produit. En fin de cycle de chauffage, la matière organique ainsi transformée est refroidie puis évacuée par une sortie située en partie basse de l'installation.

Globalement, l'installation décrite ci-dessus suivant l'état de la technique donne satisfaction en ce qu'elle permet de produire efficacement des quantités substantielles de charbon à usage agricole de manière rapide, notamment du fait du refroidissement in situ par pulvérisation d'eau. Néanmoins, le demandeur a constaté que cette technique existante pouvait être améliorée notamment quant à l'efficacité de du brassage imposé aux matériaux organiques durant la phase de carbonisation.

La présente invention a pour objet de proposer une telle amélioration.

Le document JP-A-2005146119 montre une machine dotées d'une pluralités de pales rotatives au sein d'un volume de mélange. Des projections fixes, portant le repère 16, sont présentes sur le pourtour du récéptacle délimitant le volume de brassage. Le brassage reste cependant limité.

Suivant un aspect de mode de réalisation de l'invention, est présenté un dispositif de production de charbon à usage agricole à partir de matériaux organiques agricoles comportant un réceptacle apte à recevoir les matériaux organiques, une enceinte renfermant le réceptacle et délimitant un espace intercalaire autour du réceptacle, un système de chauffage de l'espace intercalaire et un système de brassage rotatif configuré pour brasser les matériaux organiques placés dans le réceptacle, comme défini dans les revendications.

Le système de brassage rotatif comprend une pluralité de pales fixes relativement au réceptacle et une pluralité de pales mobiles en rotation relativement au réceptacle, la pluralité de pales fixes étant répartie en au moins deux étages de pales fixes suivant l'axe de rotation, la pluralité de pales mobiles étant répartie en au moins deux étages de pales mobiles suivant l'axe de rotation, les étages de pales fixes et les étages de pales mobiles étant alternés suivant l'axe de rotation.

Ainsi, grâce à l'invention, le système de brassage est réparti entre une partie fixe relativement au réceptacle et une partie mobile. L'organisation de ce brassage suivant la hauteur du réceptacle permet une bonne répartition du brassage et donc une meilleure application de l'apport calorique issu du chauffage de l'enceinte, sur l'ensemble du volume de matériaux organiques agricoles présents dans le réceptacle. Il s'ensuit une pyrolyse améliorée, à savoir plus complète et plus rapide, et un effet de tassement moindre pendant la pyrolyse ce qui permet de répartir l'effort de brassage sur une pluralité d'étages de pales mobiles sans risquer des problèmes de casse ou de surdimensionnement de motorisation.

Selon l'invention, l'espacement entre deux quelconques étages adjacents parmi respectivement, les étages de pales fixes et les étages de pales mobiles est compris entre 50 et 150 mm.

Par ailleurs, la longueur des pales fixes est selon l'invention supérieure à 50% du rayon du réceptacle lorsque celui-ci a une section circulaire dans un plan perpendiculaire à l'axe de rotation. En complément ou en alternative, cette longueur est, au moins pour une des pales fixes, supérieure à 90% du rayon dans un cas préféré.

Grâce aux dispositions ci-dessus, le brassage est rendu efficace. Alors que JP-A-2005146119 suggère des points d'accroché latéraux par les projections 16, de petite taille, l'invention propose des pales fixes largement saillantes vers le volume de brassage. Ces pâles participent pleinement au mélange, y compris à proximité de l'axe de rotation ce qui est plus efficace, alors que les techniques actuelles orientent simplement vers des brassages très majoritairement faits par les parties rotatives.

Lorsque, en outre, l'espacement entre deux quelconques étages adjacents parmi respectivement, les étages de pales fixes et les étages de pales mobiles est compris entre 50 et 150 mm, on obtient un brassage à la fois efficace et sans accroitre le couple résistant de la rotation des pales mobiles de manière trop importante.

D'autres buts et avantages apparaîtront au cours de la description qui suit qui présente un mode de réalisation préféré de l'invention illustratif mais non limitatif.

Les dessins ci-joints sont donnés à titre d'exemples et ne sont pas limitatifs de l'invention. Ils représentent seulement un mode de réalisation de l'invention et permettront de la comprendre aisément.
- La figure 1 présente une vue en coupe transversale d'un mode de réalisation du dispositif de l'invention dans sa globalité.
- La figure 2 présente une vue de dessus du dispositif selon le mode de réalisation de la figure 1.
- La figure 3 illustre un exemple de formation d'une partie de l'enceinte et du réceptacle.
- La figure 4 et la figure 5 présentent respectivement une vue en coupe transversale et une vue de dessus d'une partie de poutre de l'invention.
- Les figures 6 et 7 présentent respectivement une vue en coupe transversale et une vue de dessus d'un système de pales.
- Les figures 8 et 9 montrent respectivement une vue en coupe transversale et une vue de dessus d'un autre système de pales utilisable selon l'invention.
- La figure 10 présente une vue de côté d'un mode de réalisation d'un corps de réceptacle et la figure 11 en donne une vue de dessus.

Avant d'entrer dans le détail de la description de modes de réalisation de l'invention, en particulier au support des dessins, sont introduites ci-après des caractéristiques que peuvent éventuellement présenter certains modes de réalisation de manière individuelle ou suivant toute combinaison entre elles :
- le système de brassage rotatif comprend quatre étages de pales mobiles et trois étages de pales fixes ;
- un étage de pales fixes comprend deux pales ayant un même axe longitudinal ;
- la paroi latérale du réceptacle est de section circulaire perpendiculairement à l'axe de rotation ;
- les pales fixes du au moins un étage de pales fixes sont espacées d'une distance inférieure à 25% du diamètre de la section circulaire ;
- au moins un étage de pales mobiles comporte deux pales symétriques relativement à l'axe de rotation ;
- la longueur des pales mobiles du au moins un étage est supérieur à 75% du rayon de la section circulaire ;
- le réceptacle comprend une paroi inférieure inclinée vers le bas en direction d'un conduit de sortie ;
- le système du brassage rotatif comporte un étage de pales mobiles additionnelles à un niveau de hauteur, suivant l'axe de rotation, correspondant à une zone de jonction entre la paroi latérale du réceptacle et la paroi inférieure ;
- la longueur des pales mobiles additionnelles est inférieure à la longueur des pales mobiles des étages de pales mobiles ;
- l'espacement entre deux quelconques étages adjacents parmi respectivement, les étages de pales fixes et les étages de pales mobiles est compris entre 50 et 150 mm ;
- les pales fixes sont toutes situées dans un même plan contenant l'axe de rotation ;
- les pales mobiles sont montées sur un arbre unique ;
- l'arbre est monté à rotation sur la paroi inférieure ;
- l'arbre est monté à rotation sur poutre dirigée transversalement à l'axe de rotation ;
- la poutre comporte un circuit d'injection d'un fluide de refroidissement dans le réceptacle ;
- la poutre est surmontée par un couvercle fermant une ouverture supérieure du réceptacle ;
- les pales mobiles sont toutes situées dans un même plan contenant l'axe de rotation ;
- la longueur des pales fixes est supérieure à 50% du rayon du réceptacle lorsque celui-ci a une section circulaire dans un plan perpendiculaire à l'axe de rotation. En complément ou en alternative, cette longueur est, au moins pour une des pales fixes, supérieure à 90% du rayon dans un cas préféré.

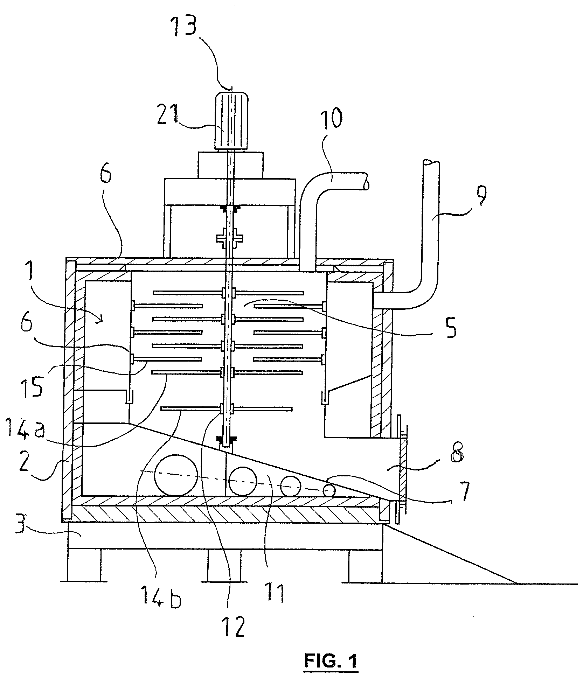

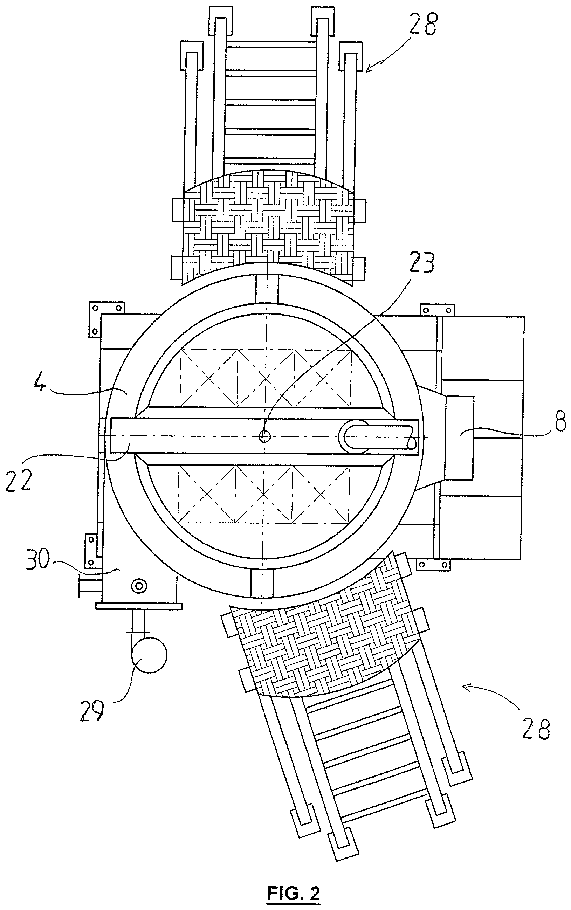

Dans l'exemple donné en figure 1, le dispositif se présente globalement sous forme d'une enceinte 1 présentant une paroi extérieure 2 avantageusement recouverte d'un revêtement isolant thermiquement par exemple utilisant de la paille de verre et/ou des matériaux réfractaires et/ou des matériaux céramiques. La paroi extérieure 2 isolante couvre avantageusement au moins une partie de la périphérie latérale et inférieure de l'enceinte 1. L'ensemble comporte en outre un couvercle 4, plus particulièrement visible en vue de dessus en figure 2, avec le cas d'un système sensiblement de section circulaire. Le couvercle 4 permet un accès au volume interne de l'enceinte 1 dont les composants seront décrits plus en détail ultérieurement. A l'opposé du couvercle 4, le dispositif comporte préférentiellement une base 3 constituant une structure d'appui du dispositif sur un support, par exemple le sol. Le fond de l'enceinte 1 est avantageusement plat.

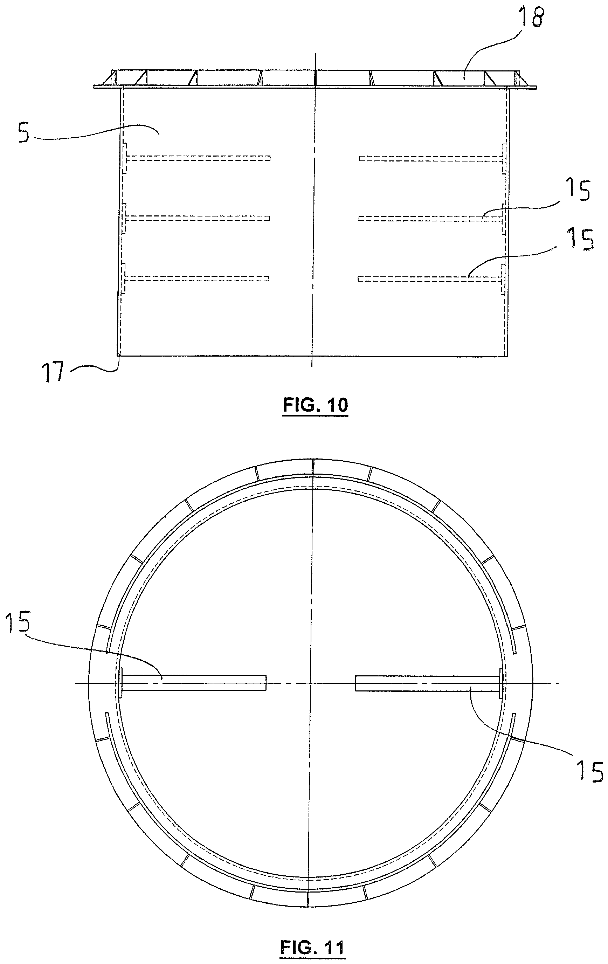

Le volume de l'enceinte 1 reçoit un réceptacle 5 composé, dans l'exemple de la figure 1 et de la figure 10, par un corps sensiblement allongé suivant un axe 13 et de section circulaire de sorte à former un corps cylindrique d'axe 13 préférentiellement vertical. En partie basse du réceptacle 5, ce dernier comporte une paroi inférieure 7 sous forme de plan incliné, présentant une pente autorisant une descente par gravité du charbon produit depuis la partie de corps du réceptacle 5 en direction d'un conduit de sortie 8 visible en figures 1 et 2. On comprend que l'on peut admettre des matériaux organiques telle la paille de riz par l'extrémité supérieure du réceptacle 5 correspondant à celle située du couvercle 4, imposer une transformation par pyrolyse à ce matériau à l'intérieur du corps du réceptacle 5 et évacuer le charbon à usage agricole ainsi produit par le conduit de sortie 8.

D'une manière générale, la réaction produite dans le dispositif selon l'invention peut obéir à des conditions telles que présentées dans l'antériorité WO-A-2012059113 précité. Le dispositif comporte avantageusement :
- un conduit de chauffage 30 relié à une extrémité distale à un brûleur 29, par exemple un brûleur à gaz ou à fuel, de sorte à fournir une quantité de chaleur élevée dans une partie de l'enceinte 1 située entre la paroi extérieure 2 et la face extérieure du réceptacle 5. Dans cet espace intermédiaire, on peut produire un échauffement des matériaux organiques en absence d'air de sorte à réaliser le procédé de carbonisation. On produit ainsi de la poudre dénommée biochar en anglais. Durant ce cycle, les gaz issus de la pyrolyse peuvent être éliminés par l'intermédiaire d'un conduit d'évacuation 10, soit en les recyclant pour réaliser une pyrolyse servant à l'échauffement de l'espace intermédiaire de l'enceinte 1, soit par brûlage vers l'extérieur. En outre, une cheminée 9 permet un raccordement du volume intérieur de l'enceinte 1 à l'air ambiant si besoin.

On comprend qu'une pyrolyse efficace et homogène des matériaux organiques servant de base à la fabrication de biochar est fondamentale à l'efficacité du système. A cet effet, l'invention comporte un système de brassage spécifique au sein du réceptacle 5.

En particulier, dans le cas représenté en figure 1, ce système comprend une pluralité de pales avec pour partie des pales fixes 15 et pour partie des pales mobiles 14a, 14b, coopérant de façon spécifique pour homogénéiser le brassage des matériaux organiques. Plus particulièrement, le réceptacle 5 est équipé sur la paroi interne de son corps principal cylindrique d'une pluralité d'étages de pales fixes 15. Dans le cas des figures 10 et 11, les pales fixes 15 sont chacune orientées suivant un diamètre du réceptacle 5 et sont réparties de manière symétrique suivant un diamètre unique. L'ensemble est avantageusement symétrique suivant l'axe 13 de rotation des pales mobiles 14a, 14b.

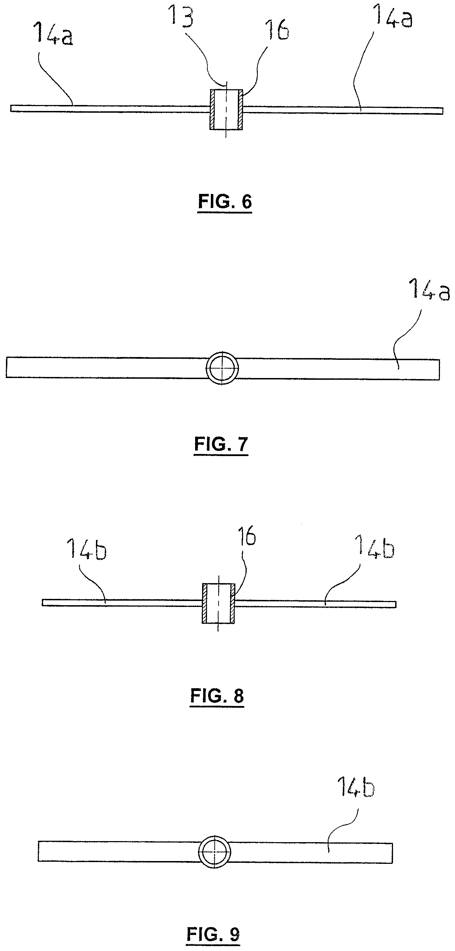

La figure 10 montre la formation de trois étages de pales fixes 15, par exemple réparties avec un espacement, régulier ou non, de l'ordre de 150 à 250 mm. Un diamètre du réceptacle 5 de l'ordre de 1 300 mm peut convenir. Les pales fixes 15 ont par exemple une longueur de l'ordre de 500 mm et ont selon l'invention - pour au moins l'une d'entre elles et de préférence chacune- une longueur supérieure à 50% (et avantageusement 90% pour au moins l'une de ces pales 15) du rayon du réceptacle 5. Par ailleurs, de sorte à produire un obstacle suffisant à la descente des matériaux organiques le long du réceptacle 5, les pales 15 d'un étage de pales fixes sont avantageusement distantes de moins de 25% du diamètre de la section circulaire du réceptacle 5. L'invention n'exclut pas la formation d'un plus grand nombre de pales fixes à chaque étage ou à certains étages. Le système de brassage de l'invention comporte en outre une partie mobile relativement au réceptacle 5 avec, dans l'exemple représenté à la figure 1, quatre étages de pales 14a dont une réalisation est visible plus particulièrement aux figures 6 et 7. Les pales mobiles peuvent être réalisées en étages également réparties, par exemple espacées de 200 mm. Chaque étage peut comporter deux pales 14a symétriques autour de l'axe 13 de rotation. Chaque étage de pales comporte avantageusement une bague de montage 16 permettant leur montage sur un arbre 12 dirigé suivant l'axe 13. On comprend qu'il est avantageux que les étages de pales mobiles 14a partagent le même arbre 12 qui peut être ainsi facilement relié à une motorisation 21, par exemple avec un moteur et un réducteur et un système d'accouplement. La motorisation 21 est dans le cas de la figure 1 située au-dessus du couvercle 4 et un passage dans le couvercle 4 permet à l'arbre 12 de parcourir l'intérieur du réceptacle 5.

Les pales représentées aux figures 6 et 7 sont, avantageusement comme les pales fixes 15, dirigées perpendiculairement à l'axe 13 de rotation. Elles sont par ailleurs symétriques autour de l'axe 13 de manière préférée. Leurs dimensions sont préférentiellement configurées pour couvrir au moins 75% du rayon du réceptacle 5. De cette manière, tel que cela ressort de la figure 1, on forme un système de pales fixes et de pales mobiles répartissant régulièrement le brassage vers le centre du réceptacle 5 et vers sa périphérie.

Dans un mode de réalisation, les pales fixes 15 sont organisées suivant un même plan contenant l'axe 13 et avantageusement vertical. De même, les pales mobiles 14a sont avantageusement comprises dans un même plan contenant l'axe 13 et avantageusement vertical, ce plan étant rotatif relativement au réceptacle 5. En partie inférieure du corps du réceptacle 5, on place un étage de pales additionnelles 14b situé dans le cas de la figure 1 au niveau de la jonction entre la partie de corps du réceptacle 5, ici de forme cylindrique, et la partie de paroi inférieure 7 dont la pente est dirigée vers le conduit de sortie 8. Un exemple de définition de pales additionnelles 14b est présenté aux figures 8 et 9. Comme pour les pales 14a, une bague de montage 16 permet le montage sur l'arbre 12. Les pales 14b sont avantageusement comme les précédentes réalisées de manière symétrique autour de l'axe 13 de sorte à être dirigées dans leur ensemble suivant un diamètre du réceptacle 5. A titre indicatif, la largeur des pales fixes 15 et mobiles 14a, 14b peut être comprise entre 40 et 60 mm pour un réceptacle de diamètre de 1 300 mm.

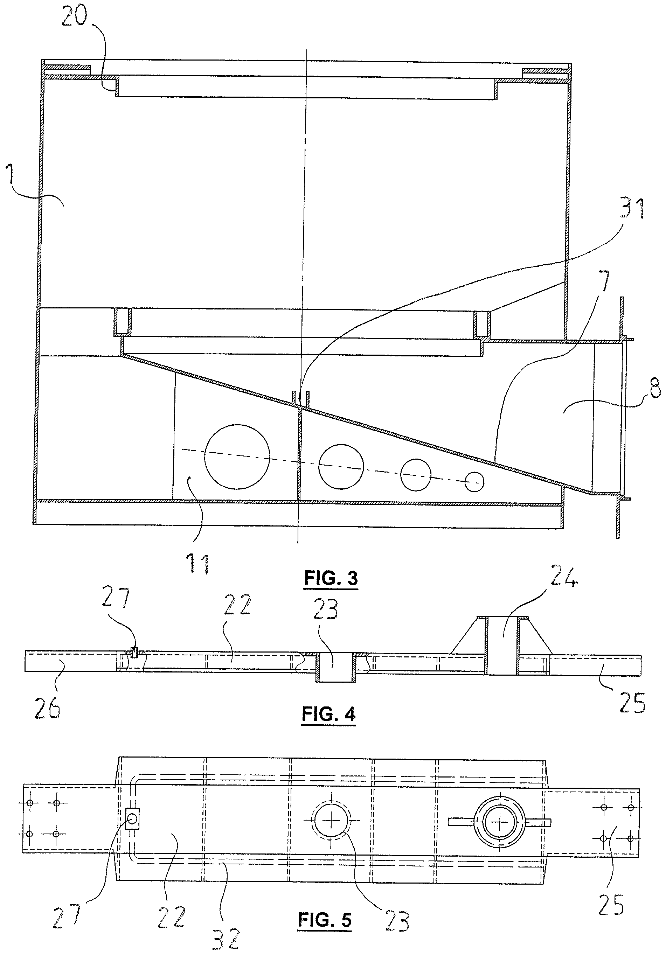

Le guidage de l'arbre 12 est préférentiellement opéré par l'intermédiaire d'un palier 31, visible en figure 3, positionné sur la paroi inférieure 7.

On notera que le réceptacle 5 peut être formé de manière à être facilement monté à l'intérieur de l'enceinte 1. Plus précisément, tel que cela apparaît en figure 3, la face intérieure de l'enceinte 1 comporte préférentiellement à son extrémité supérieure, au niveau de l'ouverture, un rebord 20 dirigé vers l'intérieur et apte à recevoir l'application de la partie de corps cylindrique du réceptacle 5. La partie opposée du réceptacle 5 correspondant à la bordure inférieure 17 visible en figure 10 est quant à elle reçue dans l'exemple de la figure 3 par une rainure 19 située au niveau de l'extrémité supérieure de la paroi inférieure 7. On notera que le rebord 20 coopère avantageusement avec une bordure supérieure 18 du réceptacle 5, l'ensemble permettant de cloisonner efficacement le réceptacle 5 relativement à l'espace intercalaire défini entre le réceptacle 5 et la paroi extérieure 2 de l'enceinte 1. Une armature 11 sous forme d'équerre permet de rigidifier la paroi inférieure 7 telle que visible en figure 3.

Suivant un autre aspect de l'invention, le dispositif comporte une poutre 22 visible aux figures 4 et 5 sous forme d'élément allongé rapportable à l'extrémité supérieure du réceptacle 5 entre le réceptacle 5 et le couvercle 4. Plus particulièrement, la poutre 22 telle que représentée comprend des première et deuxième extrémités 25, 26 qui peuvent être fixée sur le pourtour de l'enceinte 1. La partie intermédiaire de la poutre 22 surmonte l'ouverture du réceptacle 5. Avantageusement, la poutre 22 est dirigée suivant un diamètre du réceptacle 5. Elle comporte préférentiellement un trou de guidage 23 au milieu de sa longueur de sorte à autoriser le passage de l'arbre 12 et à le guider. On comprend que l'on forme en combinaison avec le palier 31 un système de guidage efficace des pales mobiles. Un trou 24 est également positionné sur la poutre 22 pour réaliser la connexion du conduit d'évacuation 10.

En outre, le dispositif selon l'invention comporte avantageusement un système de pulvérisation, par un fluide de refroidissement tel que de l'eau, du volume intérieur du réceptacle 5. De manière avantageuse, ce système de pulvérisation est combiné à la poutre 22 précédemment décrite. Dans le cas représenté, une entrée de refroidissement 27 alimente un ou plusieurs conduits visibles sous forme de tubes de refroidissement 32 en figure 5. Chacun de ces tubes comporte préférentiellement une pluralité d'ouvertures dirigées vers l'intérieur du réceptacle 5 de sorte à répartir une pulvérisation d'eau lorsque cela est utile au cycle de fabrication. En particulier, la pulvérisation d'eau peut avoir lieu en fin de fabrication de sorte à refroidir rapidement le charbon à usage agricole fabriqué et permettre plus rapidement son évacuation par le conduit de sortie 8.

Le dispositif de l'invention peut s'utiliser selon un procédé particulièrement efficace dans lequel :
- on ouvre l'accès au réceptacle 5 par déplacement du couvercle 4 ;
- on met en place les matériaux organiques représentés en figure 2 sous forme de balles de paille de riz à l'intérieur du réceptacle 5. L'accès peut être opéré par une ou plusieurs zones d'accès 28, également visibles en figure 2. Une fois les matériaux organiques mis en place dans le réceptacle 5, le couvercle 4 peut être rabattu de sorte à fermer hermétiquement le volume intérieur du réceptacle 5. Le volume de l'espace intermédiaire entre le réceptacle 5 et l'enceinte 1 est avantageusement maintenu de manière hermétique au niveau de l'extrémité supérieure du dispositif. Lorsque l'étanchéité est assurée, on peut activer le brûleur 29 de sorte à produire la réaction de pyrolyse en absence d'air permettant la fabrication du charbon. Avantageusement, le système de brassage est actif pendant au moins certaines parties du cycle de pyrolyse de sorte à produire une meilleure application de la chaleur sur les matériaux organiques et une plus grande efficacité de la carbonisation. La répartition verticale des pales ainsi que l'emploi de pales fixes et de pales mobiles permet un brassage à la fois efficace, d'un bon rendement en termes de brassage relativement à l'énergie de motorisation nécessaire. En fin de fabrication, le biochar réalisé peut être évacué par l'intermédiaire du conduit de sortie 8. La transformation en charbon ainsi que le brassage permet l'obtention d'un produit relativement pulvérulent pouvant se déplacer facilement par gravité le long de la paroi inférieure 7 de sorte à évacuer le produit sans difficulté.

### REFERENCES

1. Enceinte
2. Paroi extérieure
3. Base
4. Couvercle
5. Réceptacle
6. Paroi latérale
7. Paroi inférieure
8. Conduit de sortie
9. Cheminée
10. Conduit d'évacuation de gaz
11. Armature
12. Arbre
13. Axe
14a - 14b. Pale mobile
15. Pale fixe
16. Bague de montage
17. Bordure inférieure
18. Bordure supérieure
19. Rainure
20. Rebord
21. Motorisation
22. Poutre
23. Trou de guidage
24. Trou
25. Première extrémité
26. Deuxième extrémité
27. Entrée de refroidissement
28. Zone d'accès
29. Brûleuse
30. Conduit de chauffage
31. Palier
32. Tube de refroidissement

## Revendications

1. Dispositif de production de charbon vert à usage agricole à partir de matériaux organiques agricoles comportant :
- un réceptacle (5) apte à recevoir les matériaux organiques ;
- une enceinte (1) renfermant le réceptacle (5) et délimitant un espace intercalaire autour du réceptacle (5) ;
- un système de chauffage de l'espace intercalaire ;
- un système de brassage rotatif configuré pour brasser les matériaux organiques placés dans le réceptacle (5) ;
et dans lequel le système de brassage rotatif comprend une pluralité de pales fixes (15) relativement au réceptacle (5) et une pluralité de pales mobiles (14a, 14b) en rotation relativement au réceptacle (5), la pluralité de pales fixes (15) étant répartie en au moins deux étages de pales fixes (15) suivant l'axe (13) de rotation, la pluralité de pales mobiles (14a, 14b) étant répartie en au moins deux étages de pales mobiles suivant l'axe (13) de rotation, les étages de pales fixes et les étages de pales mobiles étant alternés suivant l'axe (13) de rotation, dispositif dans lequel la paroi latérale (6) du réceptacle (5) est de section circulaire perpendiculairement à l'axe (13) de rotation, et dans lequel le réceptacle (5) comprend une paroi inférieure (7) inclinée vers le bas en direction d'un conduit de sortie (8), **caractérisé en ce que** l'espacement entre deux quelconques étages adjacents parmi respectivement, les étages de pales fixes (15) et les étages de pales mobiles (14a, 14b) est compris entre 50 et 150 mm, et en ce au moins une pale fixe (15) a une longueur supérieure à 50% du rayon du réceptacle (5), et **en ce que** le système de brassage rotatif comporte un étage de pales mobiles (14b) additionnelles à un niveau de hauteur, suivant l'axe (13) de rotation, correspondant à une zone de jonction entre la paroi latérale (6) du réceptacle (5) et la paroi inférieure (7), et **en ce que** la longueur des pales mobiles (14b) additionnelles est inférieure à la longueur des pales mobiles (14a) des étages de pales mobiles, et **en ce que** les pales mobiles (14a, 14b) sont montées sur un arbre unique et dans lequel l'arbre (12) est monté à rotation sur la paroi inférieure (7).

2. Dispositif selon la revendication 1 dans lequel le système de brassage rotatif comprend quatre étages des pales mobiles (14a, 14b) et trois étages de pales fixes (15).

3. Dispositif selon l'une des revendications précédentes dans lequel au moins un étage de pales fixes (15) comprend deux pales ayant un même axe longitudinal.

4. Dispositif selon la revendication précédente, dans lequel les pales fixes (15) du au moins un étage de pales fixes sont espacées d'une distance inférieure à 25% du diamètre de la section circulaire.

5. Dispositif selon l'une des revendications précédentes dans lequel les pales fixes (15) du au moins un étage de pales fixes ont chacune une longueur supérieure à 90% du rayon du réceptacle (5).

6. Dispositif selon l'une des revendications précédentes dans lequel au moins un étage de pales mobiles (14a, 14b) comporte deux pales symétriques relativement à l'axe (13) de rotation.

7. Dispositif selon la revendication précédente dans lequel la longueur des pales mobiles (14a, 14b) du au moins un étage est supérieur à 75% du rayon de la section circulaire.

8. Dispositif selon l'une des revendications précédentes dans lequel les pales fixes (15) sont toutes situées dans un même plan contenant l'axe (13) de rotation.

9. Dispositif selon la revendication précédente, lequel l'arbre (12) est monté à rotation sur une poutre (22) dirigée transversalement à l'axe (13) de rotation.

10. Dispositif selon la revendication précédente dans lequel la poutre (22) comporte un circuit d'injection d'un fluide de refroidissement dans le réceptacle (5).

11. Dispositif selon la revendication précédente dans lequel la poutre (22) est surmontée par un couvercle (4) fermant une ouverture supérieure du réceptacle (5).

12. Dispositif selon l'une des revendications précédentes dans lequel les pales mobiles (14a, 14b) sont toutes situées dans un même plan contenant l'axe (13) de rotation.

## Patentansprüche

1. Vorrichtung zur Herstellung von grüner Kohle zur landwirtschaftlichen Verwendung aus organischen landwirtschaftlichen Materialien, aufweisend:
- ein Behältnis (5), das imstande ist, die organischen Materialien aufzunehmen;
- ein Gehäuse (1), welches das Behältnis (5) einschließt und einen Zwischenraum um das Behältnis (5) begrenzt;
- ein Heizsystem des Zwischenraums;
- ein Rotationsrührsystem, das ausgelegt ist, um die in das Behältnis (5) gelegten organischen Materialien zu rühren;
und wobei das Rotationsrührsystem eine Vielzahl im Verhältnis zum Behältnis (5) fester Schaufeln (15) und eine Vielzahl im Verhältnis zum Behältnis (5) rotatorisch beweglicher Schaufeln (14a, 14b) umfasst, wobei die Vielzahl fester Schaufeln (15) in mindestens zwei Stufen fester Schaufeln (15) gemäß der Rotationsachse (13) verteilt ist, wobei die Vielzahl beweglicher Schaufeln (14a, 14b) in mindestens zwei Stufen beweglicher Schaufeln gemäß der Rotationsachse (13) verteilt ist, wobei die Stufen fester Schaufeln und die Stufen beweglicher Schaufeln gemäß der Rotationsachse (13) abwechselnd sind, wobei bei der Vorrichtung die Seitenwand (6) des Behältnisses (5) kreisförmigen Querschnitts senkrecht zur Rotationsachse (13) ist, und wobei das Behältnis (5) eine nach unten in Richtung einer Ausgangsleitung (8) geneigte untere Wand (7) umfasst, **dadurch gekennzeichnet, dass** die Beabstandung zwischen zwei beliebigen benachbarten Stufen von den jeweiligen Stufen fester Schaufeln (15) und den Stufen beweglicher Schaufeln (14a, 14b) zwischen 50 und 150 mm liegt und dass mindestens eine feste Schaufel (15) eine Länge über 50 % des Radius des Behältnisses (5) hat und dass das Rotationsrührsystem eine Stufe zusätzlicher beweglicher Schaufeln (14b) in einem Höhenbereich gemäß der Rotationsachse (13) aufweist, der einer Verbindungszone zwischen der Seitenwand (6) des Behältnisses (5) und der unteren Wand (7) entspricht und dass die Länge der zusätzlichen beweglichen Schaufeln (14b) kleiner als die Länge der beweglichen Schaufeln (14a) der Stufen beweglicher Schaufeln ist und dass die beweglichen Schaufeln (14a, 14b) auf einer einzigen Welle angebracht sind und wobei die Welle (12) auf der unteren Wand (7) rotatorisch angebracht ist.

2. Vorrichtung nach Anspruch 1, wobei das Rotationsrührsystem vier Stufen der beweglichen Schaufeln (14a, 14b) und drei Stufen fester Schaufeln (15) umfasst.

3. Vorrichtung nach einem der vorangehenden Ansprüche, wobei mindestens eine Stufe fester Schaufeln (15) zwei Schaufeln mit derselben Längsachse umfasst.

4. Vorrichtung nach vorangehendem Anspruch, wobei die festen Schaufeln (15) der mindestens einen Stufe fester Schaufeln in einem Abstand unter 25 % des Durchmessers des kreisförmigen Querschnitts beabstandet sind.

5. Vorrichtung nach einem der vorangehenden Ansprüche, wobei die festen Schaufeln (15) der mindestens einen Stufe fester Schaufeln jeweils eine Länge über 90 % des Radius des Behältnisses (5) haben.

6. Vorrichtung nach einem der vorangehenden Ansprüche, wobei mindestens eine Stufe beweglicher Schaufeln (14a, 14b) zwei im Verhältnis zur Rotationsachse (13) symmetrische Schaufeln aufweist.

7. Vorrichtung nach vorangehendem Anspruch, wobei die Länge der beweglichen Schaufeln (14a, 14b) der mindestens einen Stufe größer als 75 % des Radius des kreisförmigen Querschnitts ist.

8. Vorrichtung nach einem der vorangehenden Ansprüche, wobei sich die festen Schaufeln (15) alle in derselben Ebene befinden, die die Rotationsachse (13) enthält.

9. Vorrichtung nach vorangehendem Anspruch, wobei die Welle (12) auf einem Balken (22) rotatorisch angebracht ist, der transversal zur Rotationsachse (13) ausgerichtet ist.

10. Vorrichtung nach vorangehendem Anspruch, wobei der Balken (22) einen Kreis zum Einleiten eines Kühlfluids in das Behältnis (5) aufweist.

11. Vorrichtung nach vorangehendem Anspruch, wobei der Balken (22) von einem Deckel (4) überlagert wird, der eine obere Öffnung des Behältnisses (5) verschließt.

12. Vorrichtung nach einem der vorangehenden Ansprüche, wobei sich die beweglichen Schaufeln (14a, 14b) alle in derselben Ebene befinden, die die Rotationsachse (13) enthält.

## Claims

1. Device for producing green coal for agricultural use from agricultural organic materials, including:
- a container (5) able to receive the organic materials;
- an enclosure (1) enclosing the container (5) and delimiting an intermediate space around the container (5);
- a system for heating the intermediate space;
- a rotary stirring system configured so as to stir the organic materials placed in the container (5);
and wherein the rotary stirring system comprises a plurality of blades (15) that are fixed relative to the container (5) and a plurality of moving blades (14a, 14b) rotating relative to the container (5), the plurality of fixed blades (15) being distributed into at least two stages of fixed blades (15) along the rotation axis (13), the plurality of moving blades (14a, 14b) being distributed into at least two stages of moving blades along the rotation axis (13), the stages of fixed blades and the stages of moving blades being alternating along the rotation axis (13), in which device the lateral wall (6) of the container (5) has a circular cross section perpendicular to the rotation axis (13), and wherein the container (5) comprises a bottom wall (7) inclined downwards in the direction of an outlet conduit (8), **characterised in that** the spacing between any two adjacent stages from respectively the stages of fixed blades (15) and the stages of moving blades (14a, 14b) lies in the range 50 to 150 mm, and **in that** at least one fixed blade (15) has a length greater than 50% of the radius of the container (5), and **in that** the rotary stirring system includes a stage of additional moving blades (14b) at a height level, along the rotation axis (13), corresponding to a junction zone between the lateral wall (6) of the container (5) and the bottom wall (7), and **in that** the length of the additional moving blades (14b) is less than the length of the moving blades (14a) of the stages of moving blades, and **in that** the moving blades (14a, 14b) are mounted on a single shaft, and wherein the shaft (12) is mounted on the bottom wall (7) for rotation therewith.

2. Device according to claim 1, wherein the rotary stirring system comprises four stages of moving blades (14a, 14b) and three stages of fixed blades (15).

3. Device according to one of the preceding claims, wherein at least one stage of fixed blades (15) comprises two blades having the same longitudinal axis.

4. Device according to the preceding claim, wherein the fixed blades (15) of the at least one stage of fixed blades are spaced apart by a distance of less than 25% of the diameter of the circular cross-section.

5. Device according to one of the preceding claims, wherein the fixed blades (15) of the at least one stage of fixed blades each have a length greater than 90% of the radius of the container (5).

6. Device according to one of the preceding claims, wherein at least one stage of moving blades (14a, 14b) includes two blades that are symmetrical relative to the rotation axis (13).

7. Device according to the preceding claim, wherein the length of the moving blades (14a, 14b) of the at least one stage is greater than 75% of the radius of the circular cross-section.

8. Device according to one of the preceding claims, wherein the fixed blades (15) are all situated in the same plane containing the rotation axis (13).

9. Device according to the preceding claim, wherein the shaft (12) is mounted, for rotation therewith, on a beam (22) directed transversely to the rotation axis (13).

10. Device according to the preceding claim, wherein the beam (22) includes a circuit for injecting a cooling fluid into the container (5).

11. Device according to the preceding claim, wherein the beam (22) is positioned underneath a cover (4) closing a top opening of the container (5).

12. Device according to one of the preceding claims, wherein the moving blades (14a, 14b) are all situated in the same plane containing the rotation axis (13).
